# EUROPÄISCHE PATENTANMELDUNG

(11) **EP 2 012 231 A2**
(43) Veröffentlichungstag der Anmeldung: **07.01.2009**
(21) Anmeldenummer: 08157598.7
(22) Anmeldetag: 04.06.2008
(51) Int. Cl.: G06F 9/445

(54) **Verfahren zur Erstellung eines automatisch verteilbaren Software-Pakets**

(30) Priorität: 20.06.2007 DE 102007028807
(71) Anmelder: CebiCon GmbH, 53175 Bonn (DE)
(72) Erfinder: Crowley, Richard, 53343, Wachtberg (DE)
(74) Vertreter: Michalski Hüttermann & Partner Patentanwälte

(57) **Zusammenfassung**

Die Erfindung betrifft ein Verfahren zur Erstellung eines automatisch verteilbaren Software-Pakets, das auf einer einem Computer bereitgestellten Standard-Software beruht. Dabei ist ein mit dem Computer über ein Kommunikationsnetzwerk, wie dem Internet, verbundener Server vorgesehen, wobei das Verfahren folgende Schritte aufweist:
- automatische Übertragung von auf dem Server hinterlegten Paketierungsinformationen auf dem Computer auf der Grundlage der Bezeichnung der Standard-Software und wenigstens eines Installationsparameters und
- automatische Pakcticrung der Standard-Software zu einem automatisch verteilbaren Software-Paket auf dem Computer auf der Grundlage der von dem Server übertragenen Paketierungsinformationen.

Auf diese Weise wird einem Kunden, der in seinem Unternehmen eine Standard-Software auf mehrere Computer automatisch verteilen will, eine einfache und kostengünstige Lösung bereitgestellt, ein automatisch verteilbares Software-Paket ohne Vorhandensein von Skripting-Know-How zu erstellen.

## Beschreibung

Die Erfindung betrifft ein Verfahren zur Erstellung eines automatisch verteilbaren Software-Pakets, das auf einer einem Computer bereitgestellten Standard-Software beruht.

Insbesondere in mittleren und größeren Unternehmen wird bei der Installation von Software auf Computern für die einzelnen Mitarbeiter im Allgemeinen nicht so vorgegangen, dass eine individuelle Installation auf jedem einzelnem Computer vor Ort erfolgt. Vielmehr wird die zu installierende Software im Allgemeinen automatisiert verteilt. Um eine Software-Applikation automatisiert verteilen zu können, muss diese Software im Allgemeinen noch "paketiert" werden, also zu einem automatisch verteilbaren Software-Paket umgewandelt werden. Nur die wenigsten Software-Anwendungen werden vom Hersteller in einer derartigen Form angeboten, die direkt eine automatische Verteilung ermöglicht, so dass keine Paketierung mehr erforderlich ist. Die Paketierung umfasst also eine derartige Aufbereitung der ansonsten nur für einen Einzelplatz vor Ort installationsfähigen Software, dass diese mit zusätzlichen, automatisch zur Verfügung stehenden Informationen versehen wird, z. B. hinsichtlich verschiedener Installationsparameter, wie Voreinstellungen, Speicherorte usw.

Für die Software-Paketierung existieren verschiedene Standards, wobei ein häufig verwendeter Standard von Microsoft^{®} stammt, der sogenannte Microsoft-Installer^{®} (MSI^{®}). Eine entsprechende Paktierung der Software kann auf gänzlich unterschiedliche Weisen stattfinden: So kann die Paketierung durch eigene IT-Mitarbeiter eines Unternehmens erfolgen, über Dienstleister, die in Unternehmen (on-site) oder für Unternehmen (off-site) Pakete nach Aufwandsabrechnung erstellen, bis hin zu Unternehmen, die Pakete in einer sogenannten Package-Factory erstellen und zu Festpreisen an ihre Kunden verkaufen.

Jedenfalls ist für die Erstellung automatisch verteilbarer Software-Pakte, also das eigentliche Paketieren, im Allgemeinen immer Skripting-Know-How erforderlich. Dies stellt die Unternehmen, in denen Software automatisch verteilt werden soll, vor die Aufgabe, entweder eigenes, entsprechend geschultes Personal vorzuhalten oder aber immer auf entsprechend teure externe Dienstleister zurückzugreifen.

Damit ist es die Aufgabe der Erfindung, ein Verfahren bereitzustellen, mit dem auf einfache und kostengünstige Weise ein automatisch verteilbares Software-Paket erstellt werden kann.

Ausgehend von dem eingangs beschriebenen Verfahren ist diese Aufgabe dadurch gelöst, dass ein mit dem Computer über ein Kommunikationsnetzwerk verbundener Server vorgesehen ist und das Verfahren folgende Schritte aufweist:
- automatische Übertragung von auf dem Server hinterlegten Paketierungsinformationen auf den Computer auf der Grundlage der Bezeichnung der Standard-Software und wenigstens eines Installationsparameters und
- automatische Paketierung der Standard-Software zu einem automatisch verteilbaren Software-Paket auf dem Computer auf der Grundlage der von dem Server übertragenen Paketierungsinformationen.

Als Standard-Software wird dabei vorliegenden eine derartige Software verstanden, die in der bereitgestellten Form nicht nur individuell sondern in der Regel allgemein verfügbar ist. Das bedeutet, dass der Begriff "Standard-Software" im Allgemeinen kommerzielle aber auch frei erhältliche Programme meint, die in gleicher Form, wenn auch in der Regel mit unterschiedlichen Installationsparametern, von verschiedenen Nutzern installiert und verwendet werden. Unter der Bezeichnung der Standard-Software wird außerdem eine Benennung der Software verstanden, im Allgemeinen durch Namen und Version, die eine eindeutige Identifizierung der Software erlaubt.

Erfindungsgemäß wird damit eine automatische Paketierung der Standard-Software bereitgestellt, und zwar dadurch, dass auf dem Server für verschiedene Standard-Software-Installationen entsprechende Paketierungsinformationen hinterlegt sind und auf der Grundlage der Bezeichnung der Standard-Software und wenigstens eines Installationsparameters, in der Regel jedoch mehrerer Installationsparameter, aus der Standard-Software ein automatisch verteilbares Software-Paket erstellt wird. Dieses steht dann auf dem Computer zur Verfügung und kann von dort weiter verteilt werden, z. B, über ein Firmen-LAN.

Im Ergebnis wird damit die Möglichkeit bereitgestellt, auf einfache und kostengünstige Weise, nämlich insbesondere ohne Skripting-Know-How, auf der Grundlage einer Standard-Software zu einem automatisch verteilbaren Software-Paket zu gelangen. Ein Unternehmen, das dieses Verfahren nutzt, muss damit kein Skripting-Know-How mehr vorhalten, so dass es genügt, dass der für die automatische Verteilung der Software zuständige Mitarbeiter für die jeweils zu installierende Standard-Software die relevanten Installationsparameter kennt, so dass er diese dem System mitteilen kann.

Grundsätzlich ist es möglich, dem Computer und/oder dem Server aktiv Informationen hinsichtlich eines oder mehrerer Installationsparameter zukommen zu lassen. Gemäß einer bevorzugten Weiterbildung der Erfindung ist jedoch vorgesehen, dass auf dem Computer automatisch ein Abfragedialog hinsichtlich des Installationsparameters beziehungsweise der Installationsparameter erfolgt. Auf diese Weise wird sichergestellt, dass keine Installationsparameter vom Verwender des Verfahrens vergessen werden, da auf diese Weise alle relevanten Installationsparameter abgefragt werden können.

Grundsätzlich kann die Bezeichnung der Standard-Software dem System aktiv zur Verfügung gestellt werden. Gemäß einer bevorzugten Weiterbildung der Erfindung ist es jedoch vorgesehen, eine automatische Abfrage hinsichtlich der Bezeichnung der Standard-Software durchzuführen. Gemäß einer alternativen bevorzugten Weiterbildung der Erfindung ist vorgesehen, dass die Bezeichnung der dem Computer bereitgestellten Standard-Software automatisch erfasst wird. Ist in diesem Zusammenhang gemäß einer bevorzugten Weiterbildung der Erfindung vorgesehen, dass die Standard-Software auf dem Computer selbst bereitgestellt wird, vorzugsweise nämlich auf einem Wechseldatenträger, wie einer CD oder einer DVD, so kann zur Erfassung der Bezeichnung der zu installierenden Standard-Software einfach auf den Wechseldatenträger zugegriffen werden. Entsprechendes gilt auch für die bevorzugte Weiterbildung der Erfindung, gemäß der die Standard-Software online über das Kommunikationsnetzwerk bereitgestellt wird.

Gemäß einer ganz besonders bevorzugten Weiterbildung der Erfindung ist dabei vorgesehen, dass die Standard-Software von dem Server selbst bereitgestellt wird. Im Ergebnis wird damit ein Dienst zur Verfügung gestellt, der nicht nur die automatische Paketierung der Software übernimmt, sondern auch den Kauf dieser Software ermöglicht. Dem Kunden kann auf diese Weise eine einzige Adresse angeboten werden, unter der er die Software beziehen und dann auch gleich in einer derartigen Form erhalten kann, die ihm eine automatische Software-Verteilung ermöglicht.

Grundsätzlich sind verschiedene Kommunikationsnetzwerke denkbar, über die der Computer mit dem Server verbunden ist, wie ein firmeninternes LAN. Gemäß einer bevorzugten Weiterbildung der Erfindung ist jedoch vorgesehen, dass als Kommunikationsnetzwerk das Internet verwendet wird. Auf diese Weise kann der erfindungsgemäße Dienst praktisch überall auf der Welt, wo ein Internet-Zugang besteht, 24 Stunden am Tag und 7 Tage die Woche zur Verfügung gestellt werden.

Außerdem ist es möglich, die automatische Übertragung der auf dem Server hinterlegten Paketierungsinformationen auf den Computer sowie die automatische Paketierung der Standard-Software zu einem automatisch verteilbaren Software-Paket an einem beliebigen Ort, insbesondere auch auf dem Server durchzuführen. Gemäß einer bevorzugten Weiterbildung der Erfindung ist jedoch vorgesehen, dass die automatische Übertragung der auf dem Server hinterlegten Paketierungsinformationen auf den Computer und/oder die automatische Paketierung der Standardsoftware zu einem automatisch verteilbaren Software-Paket auf dem Computer mittels eines auf dem Computer selbst ablaufenden Prozesses durchgeführt wird. Das bedeutet, dass ein lokal auf dem Computer ablaufender "Wizard" bereitgestellt werden kann, der die eigentliche Paketierung auf dem Computer durchführt und dazu mit dem Server über das Kommunikationsnetzwerk Informationen austauscht, nämlich z. B. Informationen hinsichtlich der Bezeichnung der zu installierenden Standard-Software beziehungsweise der Installationsparameter dem Server zur Verfügung stellt und daraufhin von dem Server entsprechende Paketierungsinformationen erhält.

Dabei kann es grundsätzlich möglich sein, dass der Prozess, also z. B. der "Wizard" auf unterschiedliche Weisen auf den Computer gelangt, z. B. über einen Wechseldatenträger, wie eine CD oder eine DVD. Gemäß einer bevorzugten Weiterbildung der Erfindung ist jedoch vorgesehen, dass der Prozess von dem Server zur Verfügung gestellt und vorzugsweise über das Kommunikationsnetzwerk übertragen wird. Im Ergebnis wird damit eine Download-Möglichkeit zur Verfügung gestellt, mit der der "Wizard" auf den Computer übertragen werden kann. Insbesondere kann in diesem Zusammenhang vorgesehen sein, dass in Abhängigkeit von der zu installierenden Standard-Software jeweils ein bereits an diese Standard-Software bereits angepasste "Wizard" heruntergeladen werden kann.

Grundsätzlich ist es möglich, bei jeder neuen Paketierung einer Standard-Software alle Parameter automatisch neu abzufragen. Gemäß einer bevorzugten Weiterbildung der Erfindung ist jedoch vorgesehen, dass wenigstens ein Installationsparameter, vorzugsweise alle Installationsparameter, die bereits für eine vorhergehende Software-Paketierung verwendet worden sind, auf dem Server zu speichern. Auf diese Weise wird die Arbeit für den Verwenders des in Rede stehenden Verfahrens deutlich erleichtert, wenn er auf der Grundlage gleichbleibender Installationsparameter verschiedene Standard-Software-Paketierungen durchführen lassen muss.

Wie eingangs schon ausgeführt, sind für automatisch verteilbare Software-Pakete verschiedene Standardformate bekannt. In diesem Zusammenhang ist gemäß einer bevorzugten Weiterbildung der Erfindung vorgesehen, dass die automatische Paketierung der Standard-Software zu einem automatisch verteilbaren Software-Paket in einem vorbestimmten Format erfolgt, wobei im Falle einer nicht in diesem vorbestimmten Format vorliegenden Standard-Software bei der Paketierung automatisch eine Umwandlung in dieses Format erfolgt. Gemäß dieser bevorzugten Weiterbildung der Erfindung kann insbesondere vorgesehen sein, dass eine völlig automatisierte Re-Paketierung aus einem alten Setup-Verfahren auf einen aktuellen Standard, wie MSI^{®}, erfolgt.

Nachfolgend wird die Erfindung unter Bezugnahme auf ein bevorzugtes Ausführungsbeispiel anhand der Zeichnung im Detail erläutert.

Es zeigen:
- Fig. 1: schematisch das Verfahren gemäß einem bevorzugten Ausführungsbeispiel der Erfindung, angeboten über ein über das Internet zur Verfügung stehendes Web-Portal und
- Fig. 2: schematische die Re-Paketierung aus einem alten Setup-Verfahren auf einen aktuellen Standard.

Um das nachfolgend im Einzelnen beschriebene Verfahren gemäß dem bevorzugten Ausführungsbeispiel der Erfindung anbieten zu können, muss der Bereitsteller dieses Verfahrens die Standard-Software, zu der ein automatisch verteilbares Software-Paket erstellt werden soll, analysieren können. Im Rahmen einer solchen Analyse werden z. B. Vorbedingungen der Installation geprüft, werden automatisierte Tests zur Qualität und Einhaltung der Regeln der Installation durchgeführt und wird gegebenenfalls ein Regelwerk erstellt, um alte Installations-Setups in aktuelle Setups, z. B: MSI^{®}-Setups, zu konvertieren. Ferner werden die konfigurierbaren Parameter für die Installation erarbeitet, so dass über eine Abfrage dieser Parameter eine automatisierte angepasste Paketierung der Standard-Software erfolgen kann.

Auf diese Weise werden zu einer bestimmten Standard-Software jeweils zugehörige Paketierungsinformationen erstellt, die außer von der Bezeichnung der Standard-Software von den gewünschten Installationsparametern abhängen. Diese Paketierungsinformationen werden auf einem Server 1 hinterlegt, der über das Internet 2 zur Verfügung steht und zwar in Form eines Web-Portals.

In diesem Web-Portal kann nun ein Kunde die Standard-Software auswählen, die er automatisiert in seinem Unternehmen zur Verfügung stellen will. Dabei kann er sich in diesem Web-Portal über die Details zu der Software, wie Abhängigkeiten, zur Verfügung stehende Parameter usw. informieren, um dann ein entsprechendes Modul im Web-Portal zu kaufen. Danach startet er den Download eines entsprechenden "Wizards", so dass mittels dieses "Wizards" auf seinem über das Internet 2 mit dem Server 1 verbundenen Computer 3 ein Prozess zur automatischen Paketierung der Standard-Software zur Verfügung steht. Nach Start des "Wizards" sieht der Kunde nach der Anmeldung mit seinem Usernamen und Passwort die von ihm gekauften Module und wählt eines dieser Module zur Erstellung einer neuen Konfiguration oder ein bestehendes Modul zur Bearbeitung der Konfiguration aus.

Wesentlich ist nun, dass über das mittels des Servers 1 zur Verfügung gestellte Web-Portal nur Informationen zur Paketierung sowie der downloadbare "Wizard" zur Verfügung gestellt werden müssen. Die Standard-Software, die vom Kunden im Unternehmen automatisch verteilt werden soll, wird gemäß dem vorliegend beschriebenen bevorzugten Ausführungsbeispiel der Erfindung nicht über den Server 1 zur Verfügung gestellt. Vielmehr liegt diese in Form eines Wechseldatenträgers 4, wie einer Installations-DVD, vor, die dem Computer 3 z. B. über ein nicht weiter dargestelltes DVD-Laufwerk zur Verfügung gestellt wird. Dies stellt einen ganz wesentlichen Aspekt des vorliegend beschriebenen bevorzugten Ausführungsbeispiels der Erfindung dar, da aufgrund dieser Konzeption keine Verletzung des Urheberrechts des Anbieters und Vertreibers der Standard-Software zu befürchten ist. Mit andern Worten lässt der Kunde mittels des Web-Portals lediglich die ihm legal zur Verfügung stehende Standard-Software in einer derartigen Form bearbeiten, die ihm eine automatisierte Verteilung der Software ermöglicht. Insbesondere ist es damit nicht erforderlich, dass der Kunde einem Paketisierungs-Dienstleister die von ihm als Kunden erworbene Standard-Software überlässt, um die Paketierung durchzuführen.

Im Rahmen der Paketierung erzeugt der lokal auf dem Computer 3 ablaufende "Wizard" bei der Abarbeitung des ausgewählten Moduls dynamisch eine passende Installation, z. B. als MSI^{®}-Installation. Der Kunde wird durch den lokalen "Wizard" geführt und kann auf einfache Weise die Einstellungen und Konfigurationen an der Software durchführen, insbesondere, ohne dass er eines Skripting-Know-Hows bedarf. Die konkrete technische Implementierung wird nämlich im Rahmen der Umsetzung durch den "Wizard" durchgeführt. Damit können auch solche Kunden, die über kein Skripting-Expertenwissen verfügen, in kürzester Zeit ein automatisch verteilbares Software-Paket in hoher Qualität erstellen.

In diesem Zusammenhang sei angemerkt, dass auf der Grundlage dieses Konzepts entsprechende Module auch direkt downloadbar im Internet angeboten werden können. Damit kann ohne Rahmenverträge und jedenfalls ohne jegliche Verletzung der Urheberrechte der Hersteller und Anbieter der Standard-Software dem Kunden die Möglichkeit gegeben werden, auf einfache Weise zu fertig aufbereiteten, von Laien umsetzbaren und konfigurierbaren automatischen Software-Installationen zu gelangen. Dazu kann der Kunde ein umfangreiches Informationspaket zu der Software bekommen, insbesondere hinsichtlich Konflikten mit anderen Software-Produkten, Analyse auf Verletzungen der MSI^{®}-Regeln usw.

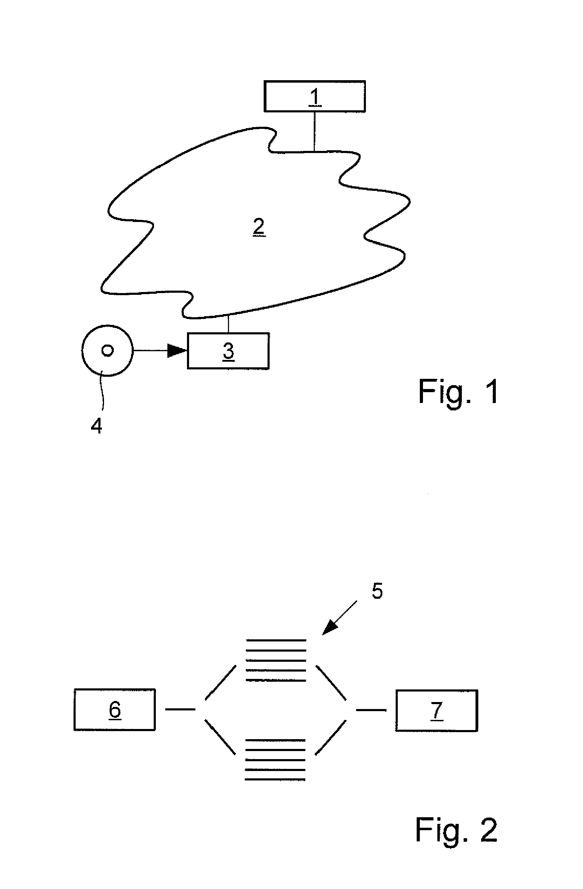

Eine besondere Eigenschaft des vorliegend beschriebenen Verfahrens zur Erstellung eines automatisch verteilbaren Software-Pakets liegt im Übrigen auch in der Technik, die zur Anwendung kommt, wenn die Installation nicht bereits in einem vorbestimmten Format, wie dem MSI^{®}-Format, vorliegt. Hier wird die Software automatisiert mittels der Module auf dem Computer 3 des Kunden installiert, auf dem gerade der "Wizard" läuft, wobei dann die notwendigen Dateien und Daten eingesammelt werden und daraus eine völlig neue, z. B. auf dem MSI^{®}-Standard basierende Installation erstellt wird. Dieser auch Re-Paketierung genannte Prozess ist schematisch aus Fig. 2 ersichtlich, die zeigt, wie im Rahmen des Re-Paketisierungsprozesses 5 aus einem alten Installations-Setup 6 eine Installation in einem aktuellen Standard-Format 7 zur Verfügung gestellt wird. Dabei wird vorliegend derart vorgegangen, dass der Teil des Re-Paketierungsprozesses 5, der aus dem alten Installations-Setup 6 die Informationen extrahiert, bereits durchgeführt worden ist, bevor der "Wizard" anläuft. Auf diese Weise muss der "Wizard" nur noch auf die bereits "freigelegten" Informationen zugreifen, um diese für das aktuelle Standard-Format verwenden zu können.

Die Module, die von dem Server 1 über das Internet auf den Computer 3 des Kunden übertragen werden, stellen praktisch eine Hülle dar, innerhalb derer alle Informationsbestandteile zu dem Modul verbunden werden, wobei der Inhalt im Allgemeinen in einer verschlüsselten Form gespeichert wird. Diese Hülle kann zusätzlich mit weiteren Informationen, z. B. zur Lizenzierung, versehen werden. Dabei sind die Hauptbestandteile eine Skripting-Sprache mit Zugriff auf alle System-Ressourcen, wie Dateien, Registry, INI-Dateien usw. Außerdem umfasst diese Skripting-Sprache spezielle Befehle zur Bearbeitung und Erstellung von Installations-Dateien.

Ferner ist eine Dialog-Beschreibungssprache umfasst, um die spezifischen Konfigurationsdialoge in den verschiedenen Kategorien, wie Setup, Standard- und Experten-Konfiguration einfach und komfortabel umzusetzen, z. B. auch mit Abhängigkeiten innerhalb der Konfigurationen. Ferner sind Daten und Definitionen umfasst, um z. B. die lokalen Setup-Dateien des Kunden zu beschreiben (Version, Medium, Checksumme, ....) und gegebenenfalls auch die URLs, die angeben, wo der Kunde mittels des "Wizards" auf einfache Weise die Software downloaden kann, die Batches integriert werden können usw.

Maßgeblicher Bestandteil ist natürlich auch die Definition der für die Umsetzung der Software notwendigen Schritte, z. B. hinsichtlich der Frage, ob bereits eine MSI^{®}-Installation vorliegt oder die Software re-paketiert werden muss, ob Batches möglich sind und ob diese eingebunden werden müssen, ob eine Expertenkonfiguration für diese Software vorliegt usw. Ganz wesentlicher Bestandteil ist schließlich das "Expertenwissen" in Form der Definitionen und Skripte, die mittels der Angaben des Kunden die gewünschte und vollständig automatisierte Software-Installation erzeugen.

## Patentansprüche

1. Verfahren zur Erstellung eines automatisch verteilbaren Software-Pakets, das auf einer einem Computer (3) bereitgestellten Standard-Software beruht, wobei ein mit dem Computer (3) über ein Kommunikationsnetzwerk (2) verbundener Server (1) vorgesehen ist, mit folgenden Schritten:
automatische Übertragung von auf dem Server (1) hinterlegten Paketierungsinformationen auf den Computer (3) auf der Grundlage der Bezeichnung der Standard-Software und wenigstens eines Installationsparameters und
automatische Paketierung der Standard-Software zu einem automatisch verteilbaren Software-Paket auf dem Computer (3) auf der Grundlage der von dem Server (1) übertragenen Paketierungsinformationen.

2. Verfahren nach Anspruch 1, **dadurch gekennzeichnet, dass** auf dem Computer (3) automatisch ein Abfragedialog hinsichtlich des Installationsparameters erfolgt.

3. Verfahren nach Anspruch 1 oder 2, **dadurch gekennzeichnet, dass** auf dem Computer (3) automatisch ein Abfragedialog hinsichtlich der Bezeichnung der Standard-Software erfolgt.

4. Verfahren nach Anspruch 1 oder 2, **dadurch gekennzeichnet, dass** die Bezeichnung der dem Computer (3) bereitgestellten Standard-Software automatisch erfasst wird.

5. Verfahren nach einem der Ansprüche 1 bis 4, **dadurch gekennzeichnet, dass** die Standard-Software auf dem Computer (3) selbst bereitgestellt wird, vorzugsweise auf einem Wechseldatenträger (4).

6. Verfahren nach einem der Ansprüche 1 bis 4, **dadurch gekennzeichnet, dass** die Standard-Software online über das Kommunikationsnetzwerk (2) bereitgestellt wird.

7. Verfahren nach Anspruch 6, **dadurch gekennzeichnet, dass** die Standard-Software von dem Server (1) bereitgestellt wird.

8. Verfahren nach einem der Ansprüche 1 bis 7, **dadurch gekennzeichnet, dass** als Kommunikationsnetzwerk (2) das Internet verwendet wird.

9. Verfahren nach einem der Ansprüche 1 bis 8, **dadurch gekennzeichnet, dass** die automatische Übertragung der auf dem Server (1) hinterlegten Paketierungsinformationen auf den Computer (3) und/oder die automatische Paketierung der Standard-Software zu einem automatisch verteilbaren Software-Paket auf dem Computer (3) mittels eines auf dem Computer (3) ablaufenden Prozesses durchgeführt wird.

10. Verfahren nach Anspruch 9, **dadurch gekennzeichnet, dass** der Prozess von dem Server (1) zur Verfügung gestellt und vorzugsweise über das Kommunikationsnetzwerk (2) übertragen wird.

11. Verfahren nach einem der Ansprüche 1 bis 10, **dadurch gekennzeichnet, dass** der Installationsparameter auf dem Server (1) gespeichert wird.

12. Verfahren nach einem der Ansprüche 1 bis 11, **dadurch gekennzeichnet, dass** die automatische Paketierung der Standard-Software zu einem automatisch verteilbaren Software-Paket in einem vorbestimmten Format erfolgt, wobei im Fall einer nicht in diesem vorbestimmten Format vorliegenden Standard-Software bei der Paketierung automatisch eine Umwandlung in dieses Format erfolgt.
